# EUROPEAN PATENT SPECIFICATION

(11) **EP 3 669 156 B1**
(45) Date of publication and mention of the grant of the patent: **06.10.2021**
(21) Application number: 18789227.8
(22) Date of filing: 13.08.2018
(51) Int. Cl.: G01M 3/36

(54) **METHOD AND DEVICE FOR DETECTING THE PRESENCE OF LEAKS IN A FOIL PACKAGE**
VERFAHREN UND VORRICHTUNG ZUR FESTSTELLUNG DES VORHANDENSEINS VON LECKS IN EINER FOLIENVERPACKUNG
PROCÉDÉ ET DISPOSITIF DE DÉTECTION DE LA PRÉSENCE DE FUITES DANS UN EMBALLAGE EN FEUILLE D'ALUMINIUM

(30) Priority: 14.08.2017 NL 2019413
(43) Date of publication of application: 24.06.2020
(73) Proprietor: Oxipack B.V., 3992 LL Houten (NL)
(72) Inventor: AARTS, Mathias Leonardus Cornelius, 3723 HN Bilthoven (NL)
(74) Representative: van Dokkum, Willem Gerard Theodoor
(86) International application number: PCT/NL2018/050540
(87) International publication number: WO 2019/035711

(56) References cited:
- EP-A1- 0 513 931
- WO-A1-97/26521
- US-A- 4 955 226

## Description

The invention relates to a method for detecting the presence of leaks in a filled package formed from a closed flexible foil, the package comprising a fluid, the method comprising the steps: inserting the package between a first and a second flat plate, the first flat plate and the second flat plate extending parallel to each other; moving the first flat plate in the direction of the second flat plate to compress the package and to provide an overpressure in the package; measuring the pressure and/or the force exerted by the package on the first and second flat plates.

This method is known from Dutch patent application 9100867, in which the second flat plate is a support member or weighing plate, which is connected to a weighing device (scale). After the package has been placed on the weighing plate, the weight indication of the weighing device is set to zero, i.e. tared. Subsequently, by means of the first flat plate or pressure plate, a pressure is applied to and in the package and to the fluid present in the package, which pressure is higher than the atmospheric pressure, for example until the balance indicates a weight of 120 kg. Then, the flat plate is moved upwards until the weighing device shows a weight of 100 kg, for example. When the package has a surface of 500 cm², the internal (over)pressure in the package will be approximately 200 mbar. In this state, the weight indication on the weighing device is monitored in time. When this weight indication of the weighing device decreases, it is caused by the decrease of the pressure force on the package by the pressure members, because the fluid, liquid or gas, escapes and leaks from the package. Accordingly, the package is qualified to as having a leak. When the weight indication of the scales remains constant over time, no fluid has escaped from the package and the package is qualified as not having a leak.

This method is also known from US patent 4,706,494. Instead of following the indicated weight on a scale, the pressure on the upper flat plate is monitored or the displacement of the upper flat plate is monitored. If the pressure on the upper flat plate remains constant or the upper flat plate does not move, there is no leak present in the package. When the package has a leak, the upper flat plate will move downwards and the pressure in the pressure cylinder of the upper flat plate will decrease.

U.S. Patent No. 4,955,226 discloses a method and apparatus for detecting the presence of a leak in a bag (package) of potato chips. For this purpose, the bag is pressed at the top with a first shutter (pressing shutter 46) in the form of a transverse strip. Then, with the aid of a leak detection assembly with two longitudinal straps (pair or straps 51) provided with springs (springs 50) connected to a flat plate (plate 34), the package is further pressurized, without the flat plate (plate 34) being in contact with the bag. The flat plate (plate 34) is provided with a displacement measuring means (displacement transducer 36) which measures the displacement of the bag between the straps. This method has the disadvantage that at a speed of fifty bags per minute only leakages above a size of 1 cm can be detected. Because pressure cylinders (air cylinders 42 and 28) and springs are used, the bag remains pressurized during the measurement, despite the fact that fluid such as air or liquid escapes through a leakage. Therefore, the displacement measuring means measures the speed at which the first shutter and the longitudinal straps empty the bag and cannot measure the decrease of the pressure in the bag as a result of the leakage. Therefore, this method is not suitable for quickly detecting small leaks in packages.

WO 97/26521 A1 and EP 0 513 931 A1 both disclose a method and device for detecting the presence of leaks in a foil package, wherein the overall pressure applied to the upper flat plate is used for detecting a leak. Both method have the disadvantage that they are slow and not very accurate, are dependent on the size of the package and the contents of the package, and moreover are not suitable for both packages with gas and/or liquid and for packages with rigid material included.

Various means are used to pressurize a package. The applied means depend on the shape of the package and on what is contained in the package. Four main groups of packages are generally identified for leak detection, each requiring their own method and equipment.
1. Packages filled with a fluid, air or liquid or a combination of both; solid materials may be included if they do not interfere with pressing. With this type of packages, two-sided pressing by rigid flat pressure plates is sufficient.
2. Packages with solid, rigid materials; these prevent sufficient pressure build-up when pressing on both sides. With this type of packages, it is necessary to press on several sides simultaneously, or to support the package on multiple sides and press by means of a movable wall.
3. Packages with rigid material and with very little fluid. These packages are pneumatically pressed with a flexible wall.
4. Packages with a sub-atmospheric pressure. These packages are tested for leakage in an environment with underpressure.

The above-mentioned methods for packages type 1 and 2 have a number of disadvantages. The type 1 methods are suitable for detecting a leak in the flexible package containing a homogeneous filling of a fluid such as a liquid or a gas. However, for detecting leaks in mixed fillings, for example a mixture of solids with gas, such as in a consumer package with nuts, the type 1 method is less suitable and other equipment must be used. Pressing between two flat rigid pressure plates, pressure members, becomes very inaccurate when the flat plate comes into contact with the inflexible and/or rigid materials, solid material in the package. Then, the indication on the scale is not the pressure of the fluid in the package, but the pressure exerted on the rigid material by the first flat plate. Therefore, these methods with double-sided flat plates are not suitable for leak-testing when relatively little fluid is present between the particles of rigid material in the package.

Clamping a (large) package between the weighing plate and the pressure plate is a difficult procedure and is very sensitive to disturbances, because no rigid structure is formed resulting from the fluid in the package.

Moreover, the methods of type 1 and 2 have the disadvantage that the time required for performing an accurate measurement depends on the size of the package and on the amount of fluid packed in the package. A leak of equal size at equal applied internal pressure has an initial outflow rate which is identical. As a result, a pressure drop will be observed and detected earlier in a relatively small package with a small content of fluid than with a large package having a large internal content.

Being able to rapidly detect the presence of a leak is not easy with the known methods, because a force or weight of 100 kg has to be measured with great accuracy, so that a small decrease of the force is quickly observed.

Therefore, the object of the present invention is to provide a method for detecting the presence of a leak in a foil package, which method can be carried out in a simpler, faster and more accurate manner, which is independent of the size of the package and the contents of the package, and which moreover is suitable for both packages with gas and/or liquid and for packages with rigid material included.

These objects are achieved by the method according to claim 1.

In the method according to the invention, the means used to pressurize the fluid and the package are decoupled from the means used to measure the pressure in the package. First of all, the package is pressurized between two flat parallel plates, after which the distance between these flat plates is kept constant, so that the pressure in the package will quickly decrease in the event of a leak. In order to be able to measure the pressure in the package, a recess or measuring opening has been provided in the first flat plate, in which opening a part of the foil of the package can move freely and is therefore accessible to a measuring plate with which the applied pressure in the package can be measured.

In an alternative embodiment of the package, the package additionally comprises rigid particles.

Moreover, prior to the step of measuring the pressure and/or force, the method comprises the step of: moving the measuring plate in the direction of the package to cause the foil to bulge inwardly into the package in order to displace the rigid and solid particles in the package near the measuring plate.

Preferably, prior to the step of moving the measuring plate, the method comprises the step of: moving the first flat plate in a direction away from the package to lower the internal pressure in the package to facilitate the step of moving the measuring plate in the direction of the package for displacing the rigid particles.

By using two side walls on the second flat plate, the step of inserting the package comprises: inserting the package between the side walls, so that in the step of compressing the package, the package contacts the side walls.

Preferably, in the measuring position, the second flat plate is provided with a front wall and a rear wall, which defines a measuring space in combination with the two side walls, and wherein the measuring space is provided with an inflatable membrane or element, wherein the step of compressing the package comprises: inflating and pressurizing the membrane so that the package is compressed in the measuring space between the flat plates, the front wall, the rear wall and the side walls, in order to provide an overpressure in the package.

The invention also relates to a device for detecting the presence of a leak in a filled package according to claim 7.

In particular, the contact surface of the first flat plate and the second flat plate with the package is at least 80% and preferably at least 90% of the (projection) surface of the package.

Preferably the underside of the measuring plate is not provided in the same plane as the underside of the first flat plate.

In particular, the underside of the measuring plate is positioned at some distance from the underside of the first flat plate, so that in the measuring position of the package the foil of the package bulges against the measuring plate through the measuring opening. The above-mentioned measures enable detecting small leaks in the package more accurately and faster.

Preferably, the first flat plate is provided with a bracket, wherein the measuring transducer and the measuring plate are attached to the bracket.

In a special embodiment the shape of the measuring opening and the shape of the measuring plate is selected from the group including: circular, semi-circular, square, triangular, polygonal.

Preferably, the measuring opening comprises a lower edge and an upper edge, the lower edge has a smaller opening than the upper edge.

In particular, in the measuring position, the contact surface of the foil with the underside of the measuring plate is smaller than the surface of the measuring plate.

Providing vertical side walls on the second flat plate, enables measuring and testing of of packages containing rigid particles with greater accuracy and reproducibility.

In particular, the second flat plate is provided with a front wall and a rear wall.

Preferably, the measuring transducer is a static pressure sensor.

Hereinafter, the invention will be explained in more detail with reference to the accompanying drawings, whereby features and other advantages will come forward.
- Figure 1A: shows in cross-section the device for carrying out the method for leak-detection according to the invention;
- Figure 1B: shows in bottom view the measuring plate with opening;
- Figure 2: shows the device of Figure 1 in the measuring position;
- Figure 3A: shows enlarged in greater detail the measuring transducer upon the package of Figure 2;
- Figure 3B: shows enlarged in detail the shape of the bulge (protrusion) near the measuring plate of Figure 3A;
- Figure 4A: shows an embodiment according to the invention with side walls;
- Figure 4B: shows the device of Figure 4A in the measuring position;
- Figure 5A: shows the device of Figure 4B with lowered measuring plate;
- Figure 5B: shows the device of Figure 5A with raised measuring plate;
- Figure 6A: shows the method and device according to the invention for a package with little fluid;
- Figure 6B: shows the method and device of Figure 6A in the measuring position.

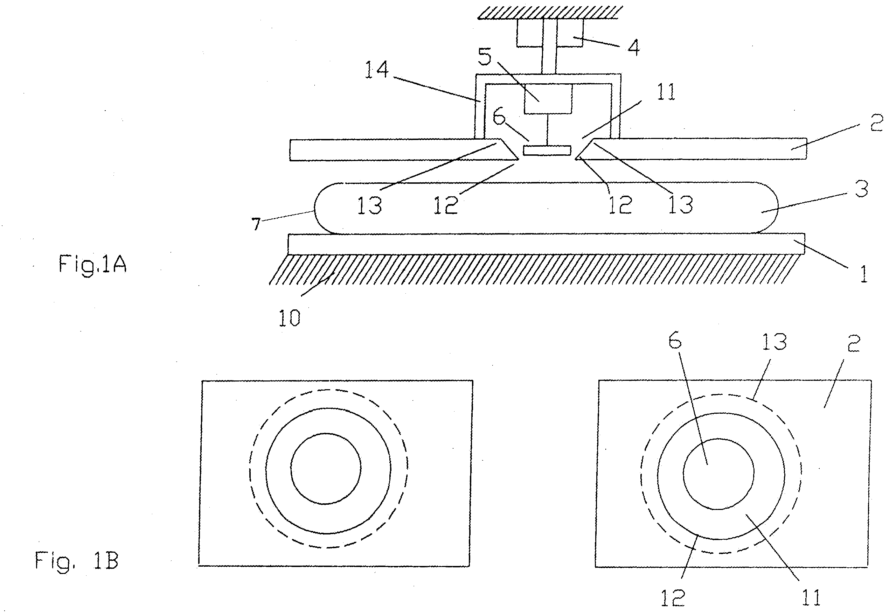

Figure 1A shows a device for carrying out the method for detecting the presence of a leak in filled packages 3 formed from a closed flexible foil including foil packages. The device comprises a second flat plate 1, i.e. support member or plate, which is placed on a fixed surface 10. A package 3 is provided on the second flat plate 1, which package is tested for the presence of a leak. The package 3 is formed from a flexible sheet or foil 7, hereinafter foil 7, which is completely closed and which is filled with a fluid such as a gas or a liquid. Preferably, the foil 7 is formed from a flexible plastic, but can also be formed from another material or an assembly of materials. In order to be able to test the package 3 for leakage, the foil 7 must be impervious to the fluid, which is present in the interior of the package 3. Above the package 3 a first flat plate 2 is provided, which is movable from and towards the package. The package can be compressed between the flat plates, thereby providing the fluid with an internal pressure, which is higher than the internal pressure in the package in the rest position or selling status. The first flat plate 2 and the second flat plate 1 are extending parallel to each other, so that the package is provided evenly with an internal pressure over its entire (projection) surface. The contact surface of the first flat plate 2 and the second flat plate 1 with the horizontal (projection) surface of the package is at least 80% and preferably at least 90%. This prevents the packaging from bulging around the edges of the flat plates resulting in uncontrolled and inaccurate measurements. The second flat plate 1 and the first flat plate 2 are rigid such that the flat plates are not deformed during pressurizing and testing of a package 3. Consequently, the flat plates do not exert any spring force on the package 3 and do not disturb the measurement and/or render the measurement less accurate and/or less sensitive.

The first flat plate 2 is connected to a displacement device 4, which moves the first flat plate 2 in the direction of the second flat plate 1 so that a force or pressure is exerted on the package 3 by the first flat plate 2 and the second flat plate 1. For example, the displacement device is configured as a mechanical system, wherein during testing of the package the distance between the first flat plate and the second flat plate remains fixed and is kept constant. The first flat plate 2 is provided with a recess. In this embodiment, the recess has the shape of a round or circular measuring opening 11.

Figure 1B shows in bottom view the circular measuring opening 11 in the first flat plate 2 in more detail. The opening 11 comprises a lower edge 12 and an upper edge 13, the lower edge 12 forming a smaller opening than the upper edge 13. The opening 11 is provided with a measuring plate 6, which is provided with smaller dimensions than the smallest opening formed by the lower edge 12. As a result, the measuring plate 6 is able to come into contact with the foil 7 of the package 3 through the opening, without contacting the first flat plate 2.

Figure 1A shows the measuring plate 6 being (mechanically) connected to a measuring transducer 5. The measuring transducer 5 produces an electrical signal, which depends on the force and/or pressure on the measuring plate. According to the invention, the measuring transducer 5 is a static pressure sensor, so that the measuring plate 6 does not move as a result of a pressure change in the package 3. The measuring transducer 5 with the measuring plate 6 are fixedly connected to the first flat plate 2 by means of a bracket 14. In the embodiment shown, the bracket 14 is connected to the displacement device 4, but this construction is not essential to the invention, the displacement device and the measuring transducer may also each be connected to the first flat plate 2 by means of separate fastening elements.

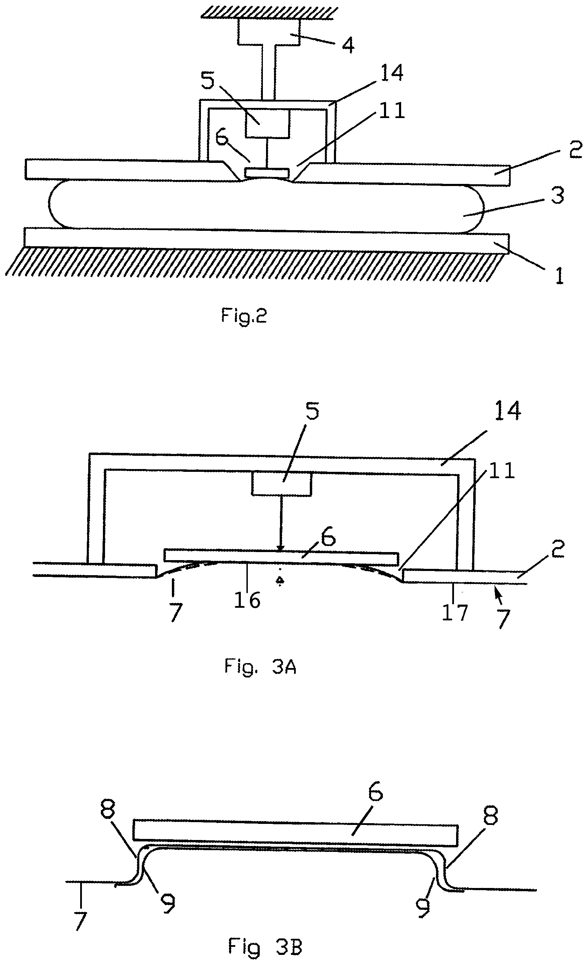

In Figure 2 is shown how, by means of the bracket 14, the displacement device 4 has displaced the first flat plate 2 and the measuring plate 6 in the direction of the second flat plate 1 and presses on the package 3. Simultaneously with the first flat plate 2, measuring plate 6 is also brought into contact with the foil of the package 3. The interior of the package is set to an internal overpressure of, for example, 200 mbar with respect to the ambient pressure. At the location of the opening 11, the foil projects upwards - also bulges upwards - along the lower edge 12 of the opening 11, because the foil is not supported there.

In enlarged detail, Figures 3A and 3B show how the foil bulges through the opening 11 against the measuring plate 6. The underside 16 of the measuring plate 6 is not extending in the same plane or level as the underside 17 of the first flat plate 2. The bulging foil 7 contacts the measuring plate 6 and exerts a pressure on said measuring plate, which pressure is recorded by the measuring transducer 5. The force exerted by the foil on the measuring plate 6 is equal to the internal pressure multiplied by the contact surface between the bulge of the foil and the measuring plate 6. When fluid is released from the package due to a leak in the package, the internal (over)pressure in the package will decrease, as a result of which the force exerted by the bulge on the measuring plate 6 will decrease. Moreover, due to the decrease of the internal pressure as a result of the elastic tension in the foil, the shape of the bulge will change. Consequently, the contact surface between the bulge and the measuring plate will be reduced, and the force exerted on the measuring plate will decrease additionally. Since the distance between the first flat plate 2 and the second flat plate 1 does not change, the pressure in the package will rapidly decrease due to a small gas or liquid leak having an opening of 10 - 20 µm.

Figure 3B shows that, due to the double action of the bulge on the measuring plate, the measuring method according to the invention is very sensitive to changes in the internal pressure in a package, and shows that this method and this device is able to detect leaks much better and much faster. In the shown preferred embodiment, the measuring plate 6 is mounted such that the contact surface of the foil 7 and the measuring plate 6 is smaller than the surface of the measuring plate 6. With reference numeral 8 the shape of the bulge is indicated at a high internal pressure; with reference numeral 9 the shape of the bulge is indicated when the internal pressure is lowered.

In addition to testing for leakages, the method can also be used to monitor degassing of certain products in packages type 4. For example, roasted (ground) coffee beans in a package still emit gases, which gasses are formed in the interior of the (ground) coffee bean during the roasting process. Degassing will increase the amount of fluid in the package, in this example gas, as a result of which the internal (over)pressure in the package increases. Usually, roasted coffee is packaged in a vacuum foil package so that by degassing the vacuum or (under)pressure will decrease and become smaller with respect to the ambient pressure.

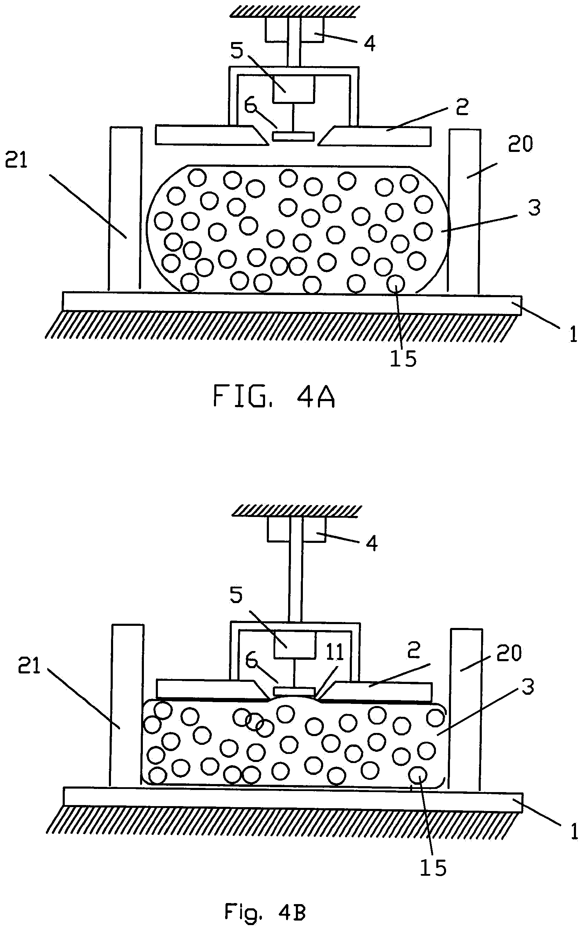

Figure 4A shows an embodiment of the device being suitable for testing and measuring packages 3 type 2, which are filled with solid, rigid particles 15 and a fluid.

The device is provided with vertical side walls 20, 21, which are arranged on the second flat plate 1 near two or more sides of the package 3. In the embodiment of Figure 4, the two side walls 20, 21 are provided on the left- and right-hand side of the package 3. When the displacement device 4 causes the first flat plate 2 to exert a force on the package 3 in the direction of the package 3, the sides of the package will come into contact with the side walls 20, 21, so that the package is enclosed between the side walls 20, 21 and the first and second flat plates 2, 1. This situation is shown in Figure 4B. As a result, the rigid particles 15 in the package will come into contact with, and abut on, the sides of the package, which sides are in contact with, and abut on, the side walls of the second flat plate 1. As a result, the rigid material is not able to easily mutually move or shift, so that the first flat plate 2 and the measuring plate 6 do not contact the rigid particles on the inside of the package, because the pressure is exerted by the first flat plate on the fluid in the package and not on the particles. Consequently, the fluid moves upwards in the direction of the first flat plate, so that a good and reproducible testing for leakage can be performed, as described above in the case of packages type 1, without disturbance by the rigid particles.

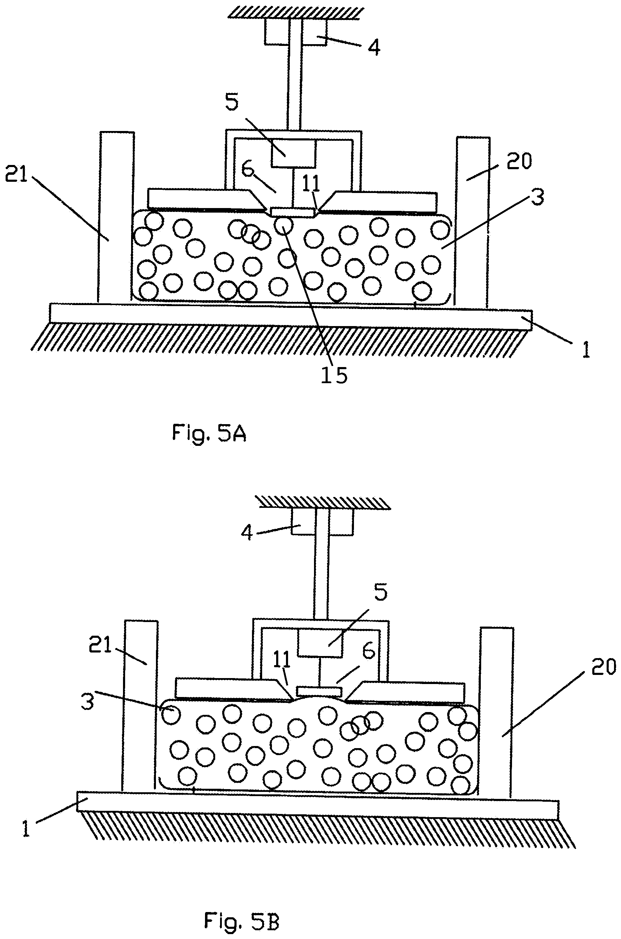

Figure 5A shows that, in case rigid particles contact the first flat plate, the fluid cannot be provided with pressure as the first flat plate 2 exerts the force on the rigid particles 15. According to the invention, the measuring plate 6 is moved downwards relative to the first flat plate 2, whereby the rigid material, which is present in the package just below the measuring opening 11 in the first flat plate 2, is displaced and pressed down, so that in the package in the vicinity of the measuring opening 11 only contains fluid. In order to further facilitate the displacement of the measuring plate 6 into the package, preferably beforehand the pressure on the package is reduced by moving the first flat plate 2 slightly upwards, in a direction away from the package. Figure 5B shows that the measuring plate 6 has returned to its original (measuring) position with respect to the first flat plate 2, so that the foil again bulges upwards through the measuring opening 11 against the measuring plate 6 and a measurement can be carried out without disturbance by the rigid particles.

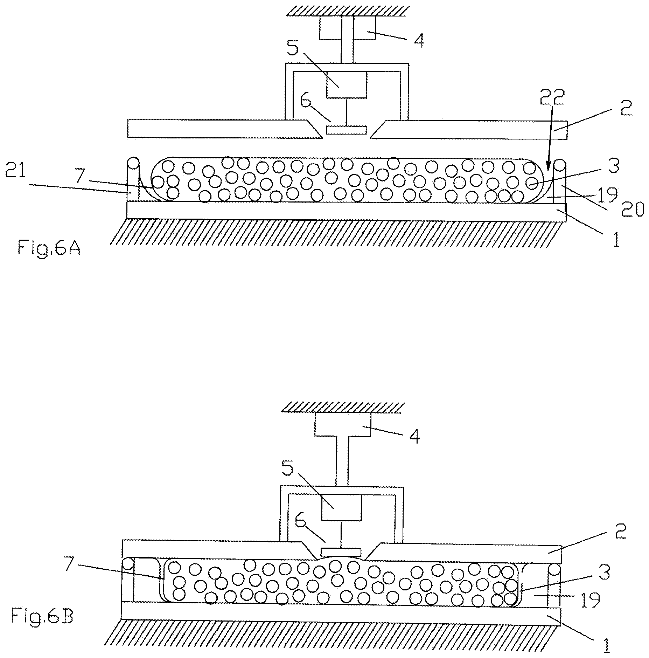

When a package contains very little fluid (package type 3), it is advantageous to adjust the measuring space 22 between the first and the second flat plate. This special embodiment is shown in Figures 6A and 6B. The second flat plate 1 is provided with vertical side walls 20, 21 and additionally with a vertical front wall and rear wall (not visible). Optionally, these walls together form a box with connected side walls. Furthermore, a membrane 19 is included in the measuring space. Preferably, said membrane is provided near the side walls 20, 21. For example, the membrane 19 is an inflatable element, manufactured from a flexible material. The volume of the inflatable element changes depending on the internal pressure. Subsequently, the package 3 is placed in the measuring space 22 between the four side walls, and the measuring space 22 is covered by the first flat plate 2. The first flat plate 2 now rests on the upper sides of the vertical side walls of the second flat plate, so that it is not possible to provide the package with the desired measuring pressure by exerting a force on the package 3 by means of the first flat plate. The pressure in the package 3 is increased by inflating the membrane 19 or by otherwise increasing its volume, so that the foil of the package is pressed against the side walls and the first and second flat plates. Consequently, an internal pressure is created in the package. As a result of the increased internal pressure in the package, the foil of the package bulges out from the measuring opening 11, as shown in Figs. 3A and 3B, and contacts the measuring plate 6. By means of the measuring transducer 5 the force exerted on the measuring plate 6 is recorded and followed, analogously to the description of Figures 2 and 3A/3B for packages type 1.

For stiff packages and packages from a foil having a low flexibility, such as, for example, thick foil or cardboard, no protrusion/bulge of the film material will occur in the measuring opening, or only to a small extent. For leakage-testing in such packages, the measuring plate is positioned such that the underside of the measuring plate is positioned in the same plane as the underside of the first flat plate. The force on the measuring plate is now equal to the force exerted by the first flat plate on the package. The advantage of using a measuring opening in the first flat plate is now less essential and the measured force and pressure through the measuring transducer is now equal to the (decrease) of the internal pressure in the entire package. This is a completely static measurement of the internal pressure in the package.

## Claims

1. Method for detecting a leak in a filled package (3) formed from a closed flexible foil (7), the package comprising a fluid, the method comprising the steps:
inserting the package (3) between a first flat plate (2) and a second flat plate (1), the first flat plate and the second flat plate extending parallel to each other;
moving the first flat plate (2) in the direction of the second flat plate (1) to compress the package (3) and provide an overpressure in the package;
measuring the pressure and/or the force exerted by the package (3) on the first and second flat plates (2, 1) by means of a measuring transducer (5);
fixing or keeping constant the distance between the first flat plate (2) and the second flat plate (1) during measuring the pressure and/or the force exerted
by the package on the flat plates (2, 1);
**characterized in that**
the first flat plate (2) is provided with a measuring opening (11), and that a measuring plate (6) is provided in the measuring opening (11), the measuring plate (6) being connected to the measuring transducer (5),
wherein the measuring transducer (5) is a static pressure sensor,
wherein the measuring plate (6) with the measuring transducer (5) are fixedly connected to the first flat plate (2),
wherein the step of measuring the pressure and/or the force comprises:
measuring the pressure and/or the force exerted by the package (3) on the
measuring plate (6) in the measuring opening (11).

2. Method according to claim 1, wherein the package also comprises rigid particles (15).

3. Method according to claim 2, wherein prior to the step of measuring the pressure and/or the force, the method comprises the step of:
moving the measuring plate (6) in the direction of the package (3) to cause the foil (7) to bulge inwardly into the package to displace rigid and solid particles (15) in the package near the measuring plate (6).

4. Method according to claim 3, wherein prior to the step of moving the measuring plate (6), the method comprises the step of:
moving the first flat plate (2) in a direction away from the package (3) to lower the internal pressure in the package to facilitate the step of moving the measuring plate (6) in the direction of the package for displacing the rigid particles (15).

5. Method according to claims 1 - 4, wherein the second flat plate (1) is provided with two side walls (20, 21), wherein the step of inserting the package (3) comprises:
inserting the package (3) between the side walls (20, 21) so that in the step of moving the first flat plate (2) the package (3) contacts the side walls (20, 21).

6. Method according to claim 5, wherein the second flat plate (1) is provided with a front wall and a rear wall, which defines a measuring space (22) in combination with the two side walls, and wherein the measuring space (22) is provided with an inflatable membrane or element (19), wherein the step of moving the first flat plate (2) comprises:
inflating and pressurizing the membrane (19) so that the package is compressed in the measuring space (22) between the flat plates, the front wall, the rear wall and the side walls, to provide an overpressure in the package.

7. Device for detecting a leak in a filled package (3) formed from a closed flexible foil (7) with the method according to claim 1 - 6, the package comprising a fluid, the device comprising:
a first flat plate (2) and a second flat plate (1) extending parallel to each other;
a measuring opening (11) provided in the first flat plate (2);
a measuring plate (6) provided in the measuring opening (11);
a measuring transducer (5), which is coupled to the measuring plate (6) and which measures a force and/or pressure on the measuring plate (6);
**characterized in that** the measuring transducer (5) is a static pressure sensor;
wherein the measuring transducer (5) with the measuring plate (6) are fixedly connected to the first flat plate (2),
wherein the first flat plate (2) is connected to a displacement device (4), which moves the first flat plate (2) in the direction of the second flat plate (1) for providing contact between the bag and the first and second flat plate, so that a force or pressure is exerted on the package (3) by the first flat plate (2) and the second flat plate (1).

8. Device according to claim 7, wherein the contact surface of the first flat plate (2) and the second flat plate (1) with the package is at least 80% and preferably at least 90% of the projection surface of the package.

9. Device according to claims 7 - 8, wherein the underside (16) of the measuring plate (6) is provided in another plane as the underside (17) of the first flat plate (2).

10. Device according to claims 7 - 8, wherein the underside (16) of the measuring plate (6) is positioned at some distance from the underside (17) of the first flat plate (2), so that in the measuring position of the package (3) the foil (7) of the package bulges against the measuring plate (6) through the measuring opening (11).

11. Device according to claims 7 - 10, wherein the first flat plate (2) is provided with a bracket (14), wherein the measuring transducer (5) and the measuring plate (6) are attached to the bracket (14).

12. Device according to claims 7 - 11, wherein the shape of the measuring opening (11) and the shape of the measuring plate (6) is selected from the group:
circular, semi-round, square, triangular, polygonal.

13. Device according to one of the claims 7 to 12, in which the measuring opening (11) comprises a lower edge (12) and an upper edge (13), wherein the lower edge (12) has a smaller opening than the upper edge (13).

14. Device according to one of the claims 7 to 13, wherein in the measuring position the contact surface of the foil (7) with the underside (16) of the measuring plate (6) is smaller than the surface of the measuring plate (6).

15. Device according to one of the claims 7 to 14, wherein the second flat plate (1) is provided with vertical side walls (20, 21); and wherein the second flat plate (1) is provided with a front wall and a rear wall.

## Patentansprüche

1. Verfahren zum Erkennen einer undichten Stelle in einer gefüllten Packung (3), die aus einer geschlossenen biegsamen Folie (7) gebildet ist, wobei die Packung ein Fluid enthält, wobei das Verfahren die Schritte
des Einsetzens der Packung (3) zwischen eine erste flache Platte (2) und eine zweite flache Platte (1), wobei die erste flache Platte und die zweite flache Platte zueinander parallel verlaufen;
des Bewegens der ersten flachen Platte (2) in die Richtung der zweiten flachen Platte (1), um die Packung (3) zusammenzudrücken und in der Packung einen Überdrück bereitzustellen;
des Messens des Drucks und/oder der Kraft, der oder die durch die Packung (3) auf die erste und die zweite flache Platte (2, 1) ausgeübt wird, mittels eines Messwertaufnehmers (5);
des Fixierens oder Konstanthaltens des Abstands zwischen der ersten flachen Platte (2) und der zweiten flachen Platte (1) während des Messens des Drucks und/oder der Kraft, der oder die durch die Packung auf die flachen Platten (2, 1) ausgeübt wird,
umfasst, **dadurch gekennzeichnet, dass**
die erste Platte (2) mit einer Messöffnung (11) versehen ist, und dass in der Messöffnung (11) eine Messplatte (6) bereitgestellt ist, wobei die Messplatte (6) an den Messwertaufnehmer (5) angeschlossen ist, wobei der Messwertaufnehmer (5) ein statischer Drucksensor ist,
wobei die Messplatte (6) mit dem Messwertaufnehmer (5) fest mit der ersten flachen Platte (2) verbunden ist, wobei der Schritt des Messens des Drucks und/oder der Kraft
das Messen des Drucks und/oder der Kraft, der oder die durch die Packung (3) auf die Messplatte (6) in der Messöffnung (11) ausgeübt wird, umfasst.

2. Verfahren nach Anspruch 1, wobei die Packung auch starre Teilchen (15) enthält.

3. Verfahren nach Anspruch 2, wobei das Verfahren vor dem Schritt des Messens des Drucks und/oder der Kraft den Schritt
des Bewegens der Messplatte (6) in die Richtung der Packung (3), um die Folie (7) zu einem Einwärtswölben in die Packung zu bringen, um starre und feste Teilchen (15) in der Packung in der Nähe der Messplatte (6) zu verschieben,
umfasst.

4. Verfahren nach Anspruch 3, wobei das Verfahren vor dem Schritt des Bewegens der Messplatte (6) den Schritt
des Bewegens der ersten flachen Platte (2) in eine Richtung von der Packung (3) weg, um den Innendruck in der Packung zu verringern, um den Schritt des Bewegens der Messplatte (6) in die Richtung der Packung zum Verschieben der starren Teilchen (15) zu erleichtern,
umfasst.

5. Verfahren nach Anspruch 1 bis 4, wobei die zweite flache Platte (1) mit zwei Seitenwänden (20, 21) versehen ist, wobei der Schritt des Einsetzens der Packung (3)
das Einsetzen der Packung (3) zwischen die Seitenwände (20, 21), damit die Packung (3) bei dem Schritt des Bewegens der ersten flachen Platte (2) mit den Seitenwänden (20, 21) in Kontakt gelangt,
umfasst.

6. Verfahren nach Anspruch 5, wobei die zweite flache Platte (1) mit einer vorderen Wand und einer hinteren Wand versehen ist, die in Kombination mit den beiden Seitenwänden einen Messraum (22) definieren, und wobei der Messraum (22) mit einer aufblasbaren Membran oder einem aufblasbaren Element (19) versehen ist, wobei der Schritt des Bewegens der ersten flachen Platte (2)
das Aufblasen und Beaufschlagen der Membran (19) mit Druck, damit die Packung in dem Messraum (22) zwischen den flachen Platten, der vorderen Wand, der hinteren Wand und den Seitenwänden zusammengedrückt wird, um in der Packung einen Überdruck bereitzustellen,
umfasst.

7. Vorrichtung zum Erkennen einer undichten Stelle in einer gefüllten Packung (3), die aus einer geschlossenen biegsamen Folie (7) gebildet ist, durch das Verfahren nach Anspruch 1 bis 6, wobei die Packung ein Fluid enthält, wobei die Vorrichtung
eine erste flache Platte (2) und eine zweite flache Platte (1), die zueinander parallel verlaufen;
eine Messöffnung (11), die in der ersten flachen Platte (2) bereitgestellt ist;
eine Messplatte (6), die in der Messöffnung (11) bereitgestellt ist;
einen Messwertaufnehmer (5), der mit der Messplatte (6) gekoppelt ist und eine Kraft und/oder einen Druck auf die Messplatte (6) misst,
aufweist,
**dadurch gekennzeichnet, dass**
der Messwertaufnehmer (5) ein statischer Drucksensor ist;
wobei der Messwertaufnehmer (5) mit der Messplatte (6) fest mit der ersten flachen Platte (2) verbunden ist;
wobei die erste flache Platte (2) mit einer Verschiebungsvorrichtung (4) verbunden ist, die die erste flache Platte (2) in die Richtung der zweiten flachen Platte (1) bewegt, um einen Kontakt zwischen dem Beutel und der ersten und der zweiten flachen Platte bereitzustellen, damit durch die erste flache Platte (2) und die zweite flache Platte (1) eine Kraft oder ein Druck auf die Packung (3) ausgeübt wird.

8. Vorrichtung nach Anspruch 7, wobei die Kontaktfläche der ersten flachen Platte (2) und der zweiten flachen Platte (1) mit der Packung wenigstes 80 % und vorzugsweise wenigstens 90 % der Projektionsfläche der Packung beträgt.

9. Vorrichtung nach Anspruch 7 bis 8, wobei die Unterseite (16) der Messplatte (6) in einer anderen Ebene als die Unterseite (17) der ersten flachen Platte (2) bereitgestellt ist.

10. Vorrichtung nach Anspruch 7 bis 8, wobei die Unterseite (16) der Messplatte (6) mit etwas Abstand von der Unterseite (17) der ersten flachen Platte (2) positioniert ist, damit sich die Folie (7) der Packung in der Messposition der Packung (3) durch die Messöffnung (11) gegen die Messplatte (6) wölbt.

11. Vorrichtung nach Anspruch 7 bis 10, wobei die erste flache Platte (2) mit einem Bügel (14) versehen ist, wobei der Messwertaufnehmer (5) und die Messplatte (6) an dem Bügel (14) angebracht sind.

12. Vorrichtung nach Anspruch 7 bis 11, wobei die Form der Messöffnung (11) und die Form der Messplatte (6) aus der Gruppe aus rund, halbrund, quadratisch, dreieckig und vieleckig gewählt werden.

13. Vorrichtung nach einem der Ansprüche 7 bis 12, wobei die Messöffnung (11) einen unteren Rand (12) und einen oberen Rand (13) aufweist, wobei der untere Rand (12) eine kleinere Öffnung als der obere Rand (13) aufweist.

14. Vorrichtung nach einem der Ansprüche 7 bis 13, wobei in der Messposition die Kontaktfläche der Folie (7) mit der Unterseite (16) der Messplatte (6) kleiner als die Fläche der Messplatte (6) ist.

15. Vorrichtung nach einem der Ansprüche 7 bis 14, wobei die zweite flache Platte (1) mit vertikalen Seitenwänden (20, 21) versehen ist; und wobei die zweite flache Platte (1) mit einer vorderen und einer hinteren Wand versehen ist.

## Revendications

1. Procédé de détection d'une fuite dans un emballage rempli (3) formé à partir d'une feuille d'aluminium souple fermée (7), l'emballage comprenant un fluide, le procédé comprenant les étapes consistant à :
insérer l'emballage (3) entre une première plaque plate (2) et une seconde plaque plate (1), la première plaque plate et la seconde plaque plate s'étendant parallèlement l'une à l'autre ;
déplacer la première plaque plate (2) en direction de la seconde plaque plate (1) pour comprimer l'emballage (3) et créer une surpression dans l'emballage ;
mesurer la pression et/ou la force exercée par l'emballage (3) sur les première et seconde plaques plates (2, 1) au moyen d'un transducteur de mesure (5) ;
fixer ou maintenir constante la distance entre la première plaque plate (2) et la seconde plaque plate (1) pendant la mesure de la pression et/ou de la force exercée par l'emballage sur les plaques plates (2, 1) ;
**caractérisé en ce que**
la première plaque plate (2) est pourvue d'une ouverture de mesure (11), et qu'une plaque de mesure (6) est prévue dans l'ouverture de mesure (11), la plaque de mesure (6) étant reliée au transducteur de mesure (5),
dans lequel le transducteur de mesure (5) est un capteur de pression statique,
dans lequel la plaque de mesure (6) avec le transducteur de mesure (5) sont reliés de manière fixe à la première plaque plate (2),
dans lequel l'étape de mesure de la pression et/ou de la force consiste à :
mesurer la pression et/ou de la force exercée par l'emballage (3) sur la plaque de mesure (6) dans l'ouverture de mesure (11).

2. Procédé selon la revendication 1, dans lequel l'emballage comprend également des particules rigides (15).

3. Procédé selon la revendication 2, dans lequel, avant l'étape de mesure de la pression et/ou de la force, le procédé comprend l'étape consistant à :
déplacer la plaque de mesure (6) dans la direction de l'emballage (3) pour faire en sorte que la feuille d'aluminium (7) se bombe vers l'intérieur de l'emballage afin de déplacer les particules rigides et solides (15) dans l'emballage à proximité de la plaque de mesure (6).

4. Procédé selon la revendication 3, dans lequel avant l'étape de déplacement de la plaque de mesure (6), le procédé comprend l'étape consistant à :
déplacer la première plaque plate (2) dans une direction s'éloignant de l'emballage (3) pour abaisser la pression interne dans l'emballage afin de faciliter l'étape de déplacement de la plaque de mesure (6) dans la direction de l'emballage pour déplacer les particules rigides (15).

5. Procédé selon les revendications 1 à 4, dans lequel la seconde plaque plate (1) est munie de deux parois latérales (20, 21), dans lequel l'étape d'insertion de l'emballage (3) comprend l'étape consistant à :
insérer l'emballage (3) entre les parois latérales (20, 21) de sorte que, lors de l'étape de déplacement de la première plaque plate (2), l'emballage (3) entre en contact avec les parois latérales (20, 21).

6. Procédé selon la revendication 5, dans lequel la seconde plaque plate (1) est munie d'une paroi avant et d'une paroi arrière, qui définit un espace de mesure (22) en combinaison avec les deux parois latérales, et dans lequel l'espace de mesure (22) est muni d'une membrane ou d'un élément gonflable (19), dans lequel l'étape de déplacement de la première plaque plate (2) comprend l'étape consistant à :
gonfler et pressuriser la membrane (19) de sorte que l'emballage soit comprimé dans l'espace de mesure (22) entre les plaques plates, la paroi avant, la paroi arrière et les parois latérales, pour fournir une surpression dans l'emballage.

7. Dispositif de détection d'une fuite dans un emballage rempli (3) formé d'une feuille d'aluminium souple fermée (7) avec le procédé selon les revendications 1 à 6, l'emballage comprenant un fluide, le dispositif comprenant :
une première plaque plate (2) et une seconde plaque plate (1) s'étendant parallèlement l'une à l'autre ;
une ouverture de mesure (11) prévue dans la première plaque plate (2) ;
une plaque de mesure (6) prévue dans l'ouverture de mesure (11) ;
un transducteur de mesure (5), qui est couplé à la plaque de mesure (6) et qui mesure une force et/ou une pression sur la plaque de mesure (6) ;
**caractérisé en ce que**
le transducteur de mesure (5) est un capteur de pression statique ;
dans lequel le transducteur de mesure (5) avec la plaque de mesure (6) sont reliés de manière fixe à la première plaque plate (2),
dans lequel la première plaque plate (2) est reliée à un dispositif de déplacement (4), qui déplace la première plaque plate (2) dans la direction de la seconde plaque plate (1) pour fournir un contact entre le sac et les première et seconde plaques plates, de sorte qu'une force ou une pression est exercée sur l'emballage (3) par la première plaque plate (2) et la seconde plaque plate (1).

8. Dispositif selon la revendication 7, dans lequel la surface de contact de la première plaque plate (2) et de la seconde plaque plate (1) avec l'emballage représente au moins 80% et de préférence au moins 90% de la surface de projection de l'emballage.

9. Dispositif selon les revendications 7 à 8, dans lequel la face inférieure (16) de la plaque de mesure (6) est prévue dans un autre plan que la face inférieure (17) de la première plaque plate (2).

10. Dispositif selon les revendications 7 à 8, dans lequel la face inférieure (16) de la plaque de mesure (6) est positionnée à une certaine distance de la face inférieure (17) de la première plaque plate (2), de sorte que dans la position de mesure de l'emballage (3), la feuille d'aluminium (7) de l'emballage se bombe contre la plaque de mesure (6) à travers l'ouverture de mesure (11).

11. Dispositif selon les revendications 7 à 10, dans lequel la première plaque plate (2) est munie d'un support (14), dans lequel le transducteur de mesure (5) et la plaque de mesure (6) sont fixés sur le support (14).

12. Dispositif selon les revendications 7 à 11, dans lequel la forme de l'ouverture de mesure (11) et la forme de la plaque de mesure (6) sont choisies dans le groupe : circulaire, semi-rond, carré, triangulaire, polygonal.

13. Dispositif selon l'une des revendications 7 à 12, dans lequel l'ouverture de mesure (11) comprend un bord inférieur (12) et un bord supérieur (13), le bord inférieur (12) présentant une ouverture plus petite que le bord supérieur (13).

14. Dispositif selon l'une des revendications 7 à 13, dans lequel, dans la position de mesure, la surface de contact de la feuille d'aluminium (7) avec la face inférieure (16) de la plaque de mesure (6) est plus petite que la surface de la plaque de mesure (6).

15. Dispositif selon l'une des revendications 7 à 14, dans lequel la seconde plaque plate (1) est pourvue de parois latérales verticales (20, 21) ; et dans lequel la seconde plaque plate (1) est pourvue d'une paroi avant et d'une paroi arrière.
